# EUROPEAN PATENT SPECIFICATION

(11) **EP 2 488 012 B1**
(45) Date of publication and mention of the grant of the patent: **11.09.2013**
(21) Application number: 10768609.9
(22) Date of filing: 13.10.2010
(51) Int. Cl.: A01K 1/12, A01K 11/00

(54) **METHOD FOR DETERMINING THE IDENTITY OF AN ANIMAL AT AT LEAST A FIRST LOCATION**
VERFAHREN ZUR BESTIMMUNG DER IDENTITÄT EINES TIERS AN MINDESTENS EINEM ERSTEN ORT
PROCÉDÉ DE DÉTERMINATION DE L'IDENTITÉ D'UN ANIMAL EN AU MOINS UN PREMIER EMPLACEMENT

(30) Priority: 14.10.2009 NL 2003641
(43) Date of publication of application: 22.08.2012
(73) Proprietor: N.V. Nederlandsche Apparatenfabriek NEDAP, 7141 DC Groenlo (NL)
(72) Inventor: SCHREURS, Bernard, Jan, Gerrit, 7126 CR Bredevoort (NL); KARSIJNS, Woltherus, 7397 ND Nijbroek (NL); VERSTEGE, Albertino, Bernardo, Maria, 7121 HM Aalten (NL)
(74) Representative: Jansen, Cornelis Marinus
(86) International application number: PCT/NL2010/050674
(87) International publication number: WO 2011/046434

(56) References cited:
- WO-A1-2007/064202
- DE-U1-202007 012 558

## Description

The present invention relates to a method for determining the identity and a position of an animal at at least a first location wherein for example at the at least one first location at least a part of a rotary milking parlour is present or at least a part of a rotary parlour for feeding animals is present or at least a part of a separation station is present.

Furthermore the invention relates to a system for carrying out such a method.

It is known to determine the identity of an animal by means of reading an identification code from an identification label carried by the animal. The identification label may be a well known label such as an RFID label. A problem for determining the identity and a position of an animal at a location on a rotary milking parlour is that if a single reader is used for determining the identity of the animal at the first location, the animal can be at any position within such first location. Hence, determining the position within the first location is not possible with a single reader. In order to make this possible, the first location could be sub divided in a plurality of possible positions of the animal wherein for each position a dedicated reader would be required to determine on which of the plurality of possible positions the animal is present and also what the identity of the animal is.

However if a plurality of readers are used wherein each reader is associated to a certain position at the first location, the problem arises that there is no proper place for positioning such plurality of readers in the vicinity of the rotary milking parlour such that each reader can accurately determine the identity of the animal by means of reading the identification code from the identification label if the animal is present at a certain position associated with a certain reader. The rotary milking parlour comprises upstanding fences which define milking points for the animals and which make it very difficult to use standard reader equipment which are on the one hand close enough to the rotary milking parlour for determining that the animal is on the rotary milking parlour and which on the other hand do not interfere with the rotary milking parlour as such. This would make it impossible to read the identity label while at the same time determining the position of the animal at the first location.

A similar problem arises in relation with a separation station. A separation station is provided with at least one controllable fence. The fence is opened and closed upon identifying the animal by means of the reader at a first location on the separation station. However, it is not possible to accurately determine the position of the animal at a first location so that the timing for opening and closing of the fence for the animal, based on reading the identification code of the identification label carried by the animal may be inaccurate. It is known to use IR-sensors to determine the position of the animal, but this manner is also inaccurate. The meaning of a fence also includes a trough that is arranged to turn in a left direction and right direction.

The present invention provides a solution for such problems. The method according to the invention is characterized in that the method comprises the following steps:
a. determining the identity of an animal by means of reading an identification code from an identification label carried by the animal at a second location;
b. following the animal which is identified in step a. by means of at least one camera when the animal travels from the second location towards the at least one first location while keeping the identity as determined in step a. associated with the animal followed in step b.;
c. determining by means of the at least one camera when the animal which is followed in step b. is present and/or arrives on the at least one first location while determining by means of the camera the position of the animal at the at least one first location.

According to the invention, the identity of the animal is determined at a second location which is different from the first location. This enables the identity of the animal to be determined in an easy well known manner. For example, it may be that at the second location an entrance is provided which has to be passed by the animal for travelling of the animal to the first location and which entrance has such dimensions that only one animal can pass the entrance at one time. In such a case a single reader may be used for identifying an animal at the entrance. There is no risk that two animals are identified at more or less the same time. During step b. the identified animals may travel through a relatively large area towards the first location. It is not a problem that different animals which are identified in step a. walk in different directions while, for example passing each other, as long as each animal which is identified in step a. can be followed by means of the at least one camera when the animal is travelling from the second location towards the first location within the area.

In step c. it is determined by means of the least one camera when the animal which is followed in step b. is present on the first location. With the same camera it is also possible to determine the position of the animal at the first location. This is possible because the animal is followed by means of the camera while keeping the identity of the animal as determined in step a. associated with the animal followed in step b. In such a manner it is possible to accurately determine the position of the animal at the first location as soon as the animal arrives at the first location. Also the moment on which the animal arrives at the first location can be determined by means of the camera. If the first location is a location where a part of a rotary milking parlour is present, it is possible to determine the position of an animal on a rotary milking parlour and it is also possible to determine which animal takes which position (milking point) on a rotary milking parlour. Similarly it is possible to determine the position of an animal within a first location when, on the first location, a separation station is present. In this manner it is possible to determine the exact position of an animal relative to a gate of the separation station so that the gate can be controlled accurately.
Preferably the animal is followed in step b. by means of at least one camera wherein the image of the at least one camera comprises the at least one first location and the second location. If a single camera is used, the animal only needs to be followed in step b. within one image which it is relatively easy. More preferably, the method is characterized in that the at least one camera is fixed relative to the second location.

According to a special embodiment, by means of the at least one camera in a step d. a visual code on a stand place from the rotary milking parlour which is present on the at least one first location is determined. Also according to a special embodiment, a gate from the separation station at the at least one first location is controlled in a step e. on the basis of the information obtained in step c.

Furthermore, according to a preferred embodiment, the method is characterized in that the label is an RFID label and wherein in step a. use is made from a RFID-reader for reading the identification code from the RFID label. Also preferably, use is made from a computer means connected to the at least one camera for carrying out steps a., b. and c. and optionally for carrying out steps d. and/or e. Also preferably, steps a., b., and c. and optionally steps d. and/or e. are carried out automatically. Preferably the reader is connected with the computer.

Preferably it holds that in step b. the animal is followed to any first location of a plurality of first locations wherein in step c. it is determined when the animal is present and/or arrives at any location of a plurality locations while determining by means of the camera the position of the animal at this first location where the animal arrives and/or is present. In the present application a first location of the plurality of (first) locations may be referred to as the first location and the second first location may be referred to as the third location etc..

A system according to the present invention is characterized in that it comprises at least one camera, at least one reader for reading an identification code from an identification label carried by an animal and a computer connected to the at least one camera and the at least one reader wherein the system is further provided with a rotary milking parlour or a separation station for separating animals wherein the system is arranged such that the identity and a position of the animal can be determined by means of the reader at at least a first location where at least a part of the rotary milking parlour is present or at at least a first location where at least a part of the separation station is present wherein the system is further arranged for carrying out the following steps automatically:
a. determining the identity of an animal by means of reading an identification code from an identification label carried by the animal at a second location;
b. following the animal which is identified in step a. by means of at least one camera when the animal travels from the second location towards the at least one first location while keeping the identity as determined in step a. associated with the animal followed in step b.;
c. determining by means of the at least one camera when the animal which is followed in step b. is present and/or arrives on the at least one first location while determining the position of the animal at the at least one first location.

The plurality of locations, the at least one location and/or the second location are preferably predetermined locations.

The invention will now be discussed on the basis of the drawings. In the drawings:
Figure 1 shows a first embodiment of a system according to the invention for carrying out a method according to the invention;
Figure 2 shows a second embodiment of a system according to an invention for carrying out a method according to the invention; and
Figure 3 shows a third embodiment of a system according to an invention for carrying out a method according to the invention.

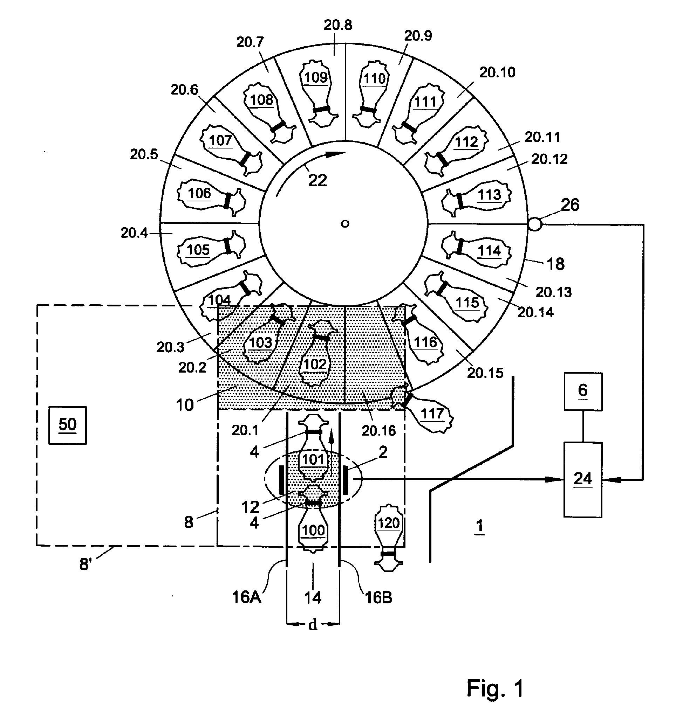

In Figure 1 with reference number 1 a system according to the invention is referred to. The system 1 is provided with a reader 2 for determining the identity of an animal. In this example a plurality of animals is shown which are labelled 100 - 120. Each animal 100-120 carries an RFID identification label 4. The reader 2 is a well known reader for reading out the identification code from the RFID label 4. The system is further provided with a camera 6, which camera produces an image of an area 8. The area 8 comprises a first location 10 which is shaded in figure 1 as well as second location 12 which is also shaded in figure 1. At the second location, an entrance 14 is provided which comprises two opposed fences 16a, 16b between which an animal can pass. The distance d between the fences 16a, 16b is such that only one animal can pass the second location 12 between the fences 16a, 16b a time. Hence, by means of the reader 2 the identity of an animal can be determined without running the risk that the animal is confused with another animal.

As can be seen from figure 1 the first location 10 comprises a portion of a well known rotary milking parlour 18. The rotary milking parlour 18 is provided with a plurality of milking points 20.i (i = 1,2,...16). Each milking point may be provided with well known means for automatically milking an animal. Each such milking points is also provided with a standing place where the animal can stand will being milked by means of the well known milking means. In use, the rotary milking parlour 18 may turn in the direction of the arrow 22. The system is further provided with a computer 24 which is connected with the reader 2 and the camera 6. By means of the system the following method is carried out.

An animal which arrives at the second location 12 is identified by means of the reader 2. The identification code of the RFID label carried by the animal is read out. At the same time, by means of the computer 24, the animal from which the identification code is read out is located within the image of the camera. Within the image, the animal is labelled with the identification code and/or a code corresponding with this identification code. Subsequently, by means of the camera and by means of the computer, the animal which is identified is followed within the area 8. If the animal which is identified on the second location walks towards the first location 10 within the area 8, the animal is followed by means of the at least one camera while keeping the identity as determined in step a. associated with the followed animal. By means of the camera 6 and by means of the computer, it is determined when the animal which is followed arrives at the first location 10. At the same time, it is determined on which position within the first location, the animal arrives at the first location. In that manner it is possible to determine which animal takes place in which milking point 20.i. because in this example also the position of a milking point is known in the following manner. In this example animal 102 takes place in milking point 20.1. The computer 24 knows which milking point is on which position within the first location at a certain moment in time because the rotary milking parlour is provided with a means 26 which determines the rotational position of the rotary milking parlour at this moment in time. If this rotational position is known at a certain moment in time, the location of each milking point is also known at this moment in time. It follows from the above that a method is carried out which comprises the following steps:
a. determining the identity of an animal by means of reading (using the reader 2) an identification code from an identification label 4 carried by the animal at a second location 12;
b. following the animal which is identified in step a. by means of at least one camera 6 when the animal travels from the second location 12 towards the first location 10 while keeping the identity as determined in step a. associated with the animal followed in step b.;
c. determining by means of the at least one camera 6 when the animal which is followed in step b. is present and/or arrives on the first location 10 while determining by means of the camera 6 the position of the animal at the first location 10.

According to step b. the animal is followed which is identified in step a. by means of at least one camera 6 when the animal travels from the second location 12 towards the at least one first location 10 while keeping the identity as determined in step a. associated with the animal followed in step b. In this example, in order to be able to follow the animal, the animal can freely move within the area 8. In this example, the area 8 corresponds to the image of the at least one camera. It is of course possible that the area 8 is covered by a plurality of cameras which in combination cover the area 8, each of which camera is connected with the computer 24. In this example, the camera 6 is fixed relative to the second location 12.

According to the method according to the invention it is now possible to determine which animal is present in which milking point of the rotary milking parlour. It is not necessary to read the identification code of the animals at the first location. This makes the method according to the invention relatively easy to implement and also highly accurate.

It is also possible to determine the position of the milking point by other means than the means 26. For example, each milking point can be marked with a visible sign which corresponds with the identity of a milking point. This visible sign can be determined by the computer within the image of the camera 6 so that it is known which milking point place is present on which position within the first location. The whole process, as described above, can be carried out automatically by means of the system according to the invention.

According to an alternative embodiment of the invention in figure 1 the milking points 20.i are replaced by feeding points 20.i respectively. In that case for example each feeding point 20.i is provided with well known means for automatically feeding an animal. Also each such feeding point provides a standing place where the animal can stand while being provided with food.

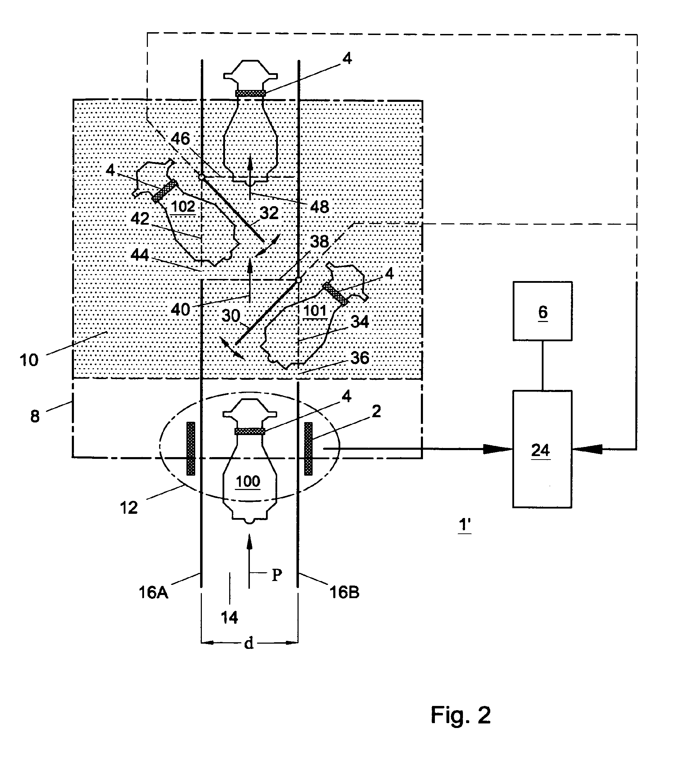

In figure 2 a system 1' is described wherein in figure 1 and figure 2 corresponding parts are provided with the same reference number.

In figure 2, within the first location, part of a separation station 28 is present. In this example, the separation station 28 is provided with a first controllable gate 30 and a second controllable gate 32. The controllable gate 30 in a first position 34 closes a first exit opening 36. In a second position 38 the controllable gate blocks a path 40 towards the second controllable gate 32 and opens the first exit opening 36. In a first position 42 the second controllable gate 32 blocks a second exit opening 44 whereas in a second position 46 the second controllable gate 32 blocks a through path 48 beyond the second controllable gate 32 in a direction P.

In this example, the gates are each controlled by the computer 24. Similarly as discussed with reference to figure 1, the identity of an animal is determined at the second location 12 by means of the reader 2. By means of the camera 6 and the computer 24 the identified animal is followed when it travels from the second location to the first location. In this example, within the first location the first controllable gate as well as the second controllable gate, are present. By means of the camera and the computer it is determined when the animal enters the first location and also the position of the identified animal is determined within the first location. Because the position of the identified animal can be identified accurately it is possible to control the first controllable gate and the second controllable gate on the right moment in time for separating an animal. For example, in this embodiment the first controllable gate is controlled for letting pass the animal 101 through the first exit opening 36. Because the position of the animal within the first location is accurately known, it is possible to control the first gate such that, for example, the first gate is not closed until the animal has passed the first exit opening. Similarly, if it is intended to let pass the animal 102 through the second exit opening 44, it is possible to accurately control the second gate 32 in time to move into the second position 46 without hurting the animal so that the animal can leave the second exit opening 44. As soon as the animal has left the second exit opening this is determined by means of the computer and the camera so that the second controllable gate can be moved in its first position 42. In this example, by means of the camera 6 and the computer 24, two gates are controlled. It is however also possible to control one gate or more than two gates. Also in each of the embodiments, it is possible that the area 8 corresponds with the image of one camera. It is however also possible that the area 8 is covered by a plurality of cameras in combination. In such a system, for example, different cameras provide different sub images wherein these sub images in combination cover the area 8. It is also possible that, for example, the first location 8 is covered by a first camera whereas the second location is covered by a second camera and wherein the remainder part of the area 8 is covered by a third camera. Each of these cameras should be connected with the computer 24, which for example can combine the images of the plurality of cameras into one image which corresponds with the area 8 so that each animal which is identified at the second location, can be followed within the area 8. It also should be noted that the area 8 can be much wider than is shown in the figures. For example, the area 8 in figure 1 can be much larger as is denoted by reference number 8'. In that case, the animals which are identified on the second location can walk towards, for example, location 50 as shown in figure 1 if they like. Then they can walk from location 50 towards the rotary milking parlour and it is still possible to determine the identity and position of the animal within the first location.

The invention is not limited to determining the identity and a position of the animal at only one first location. It is also possible to do same for each location of a plurality of locations.

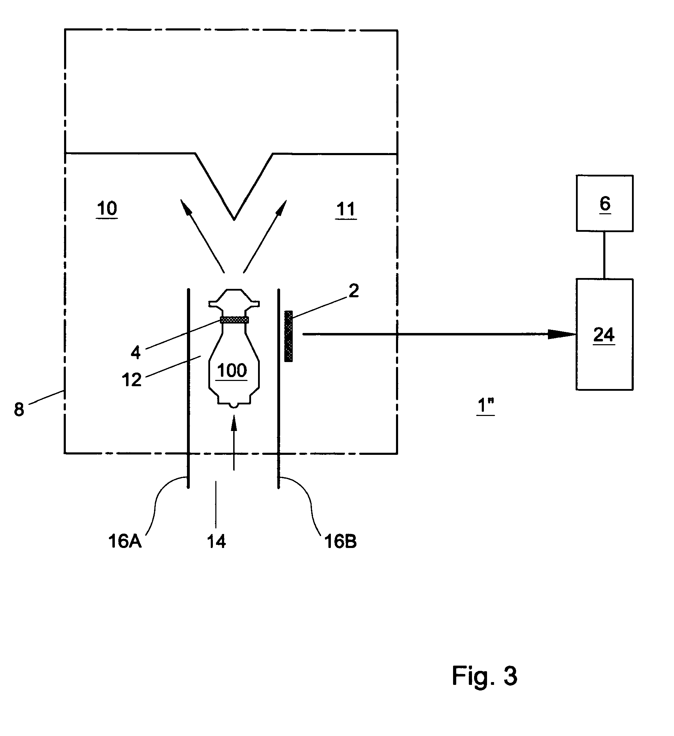

In figure 3 a system 1" is described wherein in figure 1 and figure 2 corresponding parts are provided with the same reference number. The plurality of locations comprises in this example the first location 10 and a third location 11. (in other words, the at least one first location comprises a first location (first first location) and a third location (second first location)). An animal 100 which arrives at the second location 12 is identified by means of the reader 2. The identification code of the RFID label carried by the animal is read out. At the same time, by means of the computer 24, the animal from which the identification code is read out is located within the image of the camera. Within the image, the animal is labelled with the identification code and/or a code corresponding with this identification code. Subsequently, by means of the camera and by means of the computer, the animal which is identified is followed within the area 8. If the animal which is identified on the second location walks towards the first location 10 or towards the third location 11 within the area 8, the animal is followed by means of the at least one camera while keeping the identity as determined in step a. associated with the followed animal. By means of the camera 6 and by means of the computer, it is determined when the animal which is followed arrives at the first location 10. It is also determined when the animal arrives at the third location. In this example it is supposed that the animal arrives at the third location 11. At the same time the animal arrives at the third location, it is determined on which position within the third location, the animal arrives at the third location. The same applies mutates mutandis if the animal would arrive at another location of the plurality of locations. In that manner it is possible to determine which animal takes place in which location of the plurality of locations. In this example, animal 100 arrives at the third location. It follows from the above that a method is carried out which comprises the following steps:
a. determining the identity of an animal by means of reading (using a reader 2) an identification code from an identification label 4 carried by the animal at a second location 12;
b. following the animal which is identified in step a. by means of at least one camera 6 when the animal travels from the second location 12 towards any location of the plurality of locations 10,11 while keeping the identity as determined in step a. associated with the animal followed in step b.;
c. determining by means of the at least one camera 6 when the animal which is followed in step b. is present and/or arrives on any location of the plurality of locations 10,11 while determining by means of the camera 6 the position of the animal at any location of the plurality locations where the animal is present and/or arrives.

According to step b. the animal is followed, which is identified in step a., by means of at least one camera 6 when the animal travels from the second location 12 towards any location of the plurality of locations while keeping the identity as determined in step a. associated with the animal followed in step b. In this example, in order to be able to follow the animal, the animal can freely move within the area 8. In this example, the area 8 corresponds to the image of the at least one camera. It is of course possible that the area 8 is covered by a plurality of cameras which in combination cover the area 8, each of which camera is connected with the computer 24. In this example, the camera 6 is fixed relative to the second location 12.

Such varieties are all understood to fall within the scope of the present invention as defined by the attached claims.

## Claims

1. Method for determining the identity and a position of an animal at at least a first location wherein for example at the at least one first location at least a part of a rotary milking parlour is present or at least a part of a rotary parlour for feeding animals is present or at least a part of a separation station is present, **characterised in that**, the method comprises the following steps:
a. determining the identity of an animal by means of reading an identification code from a identification label carried by the animal at a second location;
b. following the animal which is identified in step a. by means of at least one camera when the animal travels from the second location towards the at least one first location while keeping the identity as determined in step a. associated with the animal followed in step b.;
c. determining by means of the at least one camera when the animal which is followed in step b. is present and/or arrives on the at least one first location while determining by means of the camera the position of the animal at the at least one first location.

2. Method according to claim 1, **characterised in that** at the second location an entrance is provided which has to be passed by the animal for travelling of the animal to the at least one first location and which entrance has such dimensions that only one animal can pass the entrance at one time.

3. Method according to claim 1 or 2, **characterised in that**, the animal is followed in step b. by means of at least one camera wherein the image of the at least one camera comprises the at least one first location and the second location.

4. Method according to any preceding claim, **characterised in that**, the at least one camera is fixed relative to the second location.

5. Method according to any preceding claim, **characterised in that**, by means of the at least one camera in a step d. a visual code on a milking point from the rotary milking parlour which is present on the at least one first location is determined.

6. Method according to any preceding claim, **characterised in that**, a gate from the separation station at the at least one first location is controlled in a step e. on the basis of the information obtained in step c.

7. Method according to claim 6, **characterised in that**, the at least one first location is provided with a plurality of gates.

8. Method according to any preceding claim, **characterised in that**, in step b. the animal is followed to any first location of a plurality of first locations wherein in step c. it is determined when the animal is present and/or arrives at any location of a plurality locations while determining by means of the camera the position of the animal at this first location where the animal arrives and/or is present.

9. Method according to any preceding claim, **characterised in that**, use is made from a computer means connected to the at least one camera for carrying out steps a., b. and c. and optionally for carrying out steps d. and/or e. of claim 5 and 6 respectively.

10. Method according to claim 9, **characterised in that**, steps a., b., and c. and optionally steps d. and e. are carried out automatically by means of the computer.

11. Method according to any preceding claim, **characterised in that**, the label is an RFID label and wherein in step a. use is made from a RFID-reader for reading the identification code from the RFID label.

12. Method according to claims 9 and 11, **characterised in that**, the reader is connected with the computer.

13. Method according to any preceding claim for determining the identity and a position of an animal at the at least one first location and at a third location wherein step b. comprises following the animal which is identified in step a. by means of at least one camera when the animal travels from the second location towards the at least one first location or the third location while keeping the identity as determined in step a. associated with the animal followed in step b.;
c. determining by means of the at least one camera when the animal which is followed in step b. is present and/or arrives on the at least one first location or the third location while determining by means of the camera the position of the animal at the at least one first location or at the third location where the animal is present and/or arrives.

14. Method according to any preceding claim for determining the identity and a position of an animal at each location from a plurality of first locations including the at least one first location wherein step b. comprises following the animal which is identified in step a. by means of at least one camera when the animal travels from the second location towards any location of the plurality of first locations while keeping the identity as determined in step a. associated with the animal followed in step b.; and wherein step c. comprises determining by means of the at least one camera when the animal which is followed in step b. is present or arrives on any location of the plurality of first locations while determining by means of the camera the position of the animal at any location of the plurality of first locations where the animal is present and/or arrives.

15. Method according to any preceding claim, **characterised in that**, steps a., b. and c. and optionally steps d. and e. of claim 5 and 6 respectively are carried out automatically.

16. System for carrying out the method of any preceding claim, comprising at least one camera, at least one reader for reading an identification code from an identification label carried by an animal and a computer connected to the at least one camera and the at least one reader wherein the system is for example further provided with a rotary milking parlour or a separation station for separating animals wherein the system is arranged such that the identity and a position of the animal can be determined by means of the reader at the least one a first location where for example at least a part of the rotary milking parlour is present or at least a part of the separation station is present wherein the system is further arranged for carrying out the following steps automatically:
a. determining the identity of an animal by means of reading an identification code from an identification label carried by the animal at a second location;
b. following the animal which is identified in step a. by means of at least one camera when the animal travels from the second location towards the at least one first location while keeping the identity as determined in step a. associated with the animal followed in step b.;
c. determining by means of the at least one camera when the animal which is followed in step b. is present and/or arrives on the at least one first location while determining the position of the animal at the at least one first location.

17. System according to claim 16 for carrying out the method according to claim 14 wherein the system is arranged such that the identity and a position of the animal can be determined by means of the reader at each location from the plurality of first locations and wherein the system is further arranged for carrying out the following steps automatically:
a. determining the identity of an animal by means of reading an identification code from an identification label carried by the animal at the second location;
b. following the animal which is identified in step a. by means of at least one camera when the animal travels from the second location towards any location of the plurality of first locations while keeping the identity as determined in step a. associated with the animal followed in step b.;
c. determining by means of the at least one camera when the animal which is followed in step b. is present and/or arrives on any location of the plurality of first locations while determining the position of the animal at any location of the plurality where the animal is present and/or arrives.

18. System according to claim 16, **characterised in that**, the image of the at least one camera comprises the at least one first location and the second location.

19. System according to claim 17 **characterised in that**, the image of the at least one camera comprises the plurality of first locations and the second location.

## Patentansprüche

1. Verfahren zur Bestimmung der Identität und einer Position eines Tiers an mindestens einem ersten Ort, wobei beispielsweise an dem mindestens einen ersten Ort mindestens ein Teil einer Rotationsmelkanlage vorhanden ist oder mindestens ein Teil einer Rotationsanlage zum Füttern von Tieren vorhanden ist oder mindestens ein Teil einer Trennstation vorhanden ist, **dadurch gekennzeichnet, dass** das Verfahren folgende Schritte umfasst:
a. Bestimmung der Identität eines Tieres durch Lesen eines Identifikationscodes von einem Identifikationslabel, getragen von dem Tier an einem zweiten Ort;
b. Verfolgen des in Schritt a. identifizierten Tiers mit Hilfe von mindestens einer Kamera, wenn sich das Tier von dem zweiten Ort zu dem mindestens einen ersten Ort bewegt, während die Identität, wie in Schritt a. bestimmt, mit dem in Schritt b. verfolgten Tier assoziiert bleibt;
c. Bestimmung mit Hilfe von mindestens einer Kamera, wann das in Schritt b. verfolgte Tier an dem mindestens einen ersten Ort anwesend ist und/oder ankommt, während mit Hilfe der Kamera die Position des Tiers an dem mindestens einen ersten Ort bestimmt wird.

2. Verfahren nach Anspruch 1, **dadurch gekennzeichnet, dass** an dem zweiten Ort ein Eingang bereitgestellt ist, den das Tier passieren muss, damit das Tier zu dem mindestens einen ersten Ort gelangen kann, wobei der Eingang so dimensioniert ist, dass er von jeweils nur einem Tier passiert werden kann.

3. Verfahren nach Anspruch 1 oder 2, **dadurch gekennzeichnet, dass** der Weg des Tiers in Schritt b. mit Hilfe von mindestens einer Kamera verfolgt wird, wobei das Bild der mindestens einen Kamera den mindestens einen ersten Ort und den zweiten Ort umfasst.

4. Verfahren nach einem der vorhergehenden Ansprüche, **dadurch gekennzeichnet, dass** die mindestens eine Kamera in Bezug zum zweiten Ort fixiert ist.

5. Verfahren nach einem der vorhergehenden Ansprüche, **dadurch gekennzeichnet, dass** mit Hilfe von der mindestens einen Kamera in Schritt d ein visueller Code an einer Melkstelle von der Rotationsmelkanlage, die an dem mindestens einen ersten Ort vorhanden ist, bestimmt wird.

6. Verfahren nach einem der vorhergehenden Ansprüche, **dadurch gekennzeichnet, dass** ein Tor von der Trennstation an dem mindestens einen ersten Ort in einem Schritt e. auf der Basis der in Schritt c. erhaltenen Informationen gesteuert wird.

7. Verfahren nach Anspruch 6, **dadurch gekennzeichnet, dass** der mindestens eine erste Ort mit mehreren Toren versehen ist.

8. Verfahren nach einem der vorhergehenden Ansprüche, **dadurch gekennzeichnet, dass** in Schritt b. der Weg des Tiers zu einem beliebigen ersten Ort von mehreren ersten Orten verfolgt wird, wobei in Schritt c. bestimmt wird, wann das Tier an einem beliebigen Ort von mehreren Orten anwesend ist und/oder ankommt, während mit Hilfe der Kamera die Position des Tieres an dem ersten Ort, wo das Tier ankommt und/oder anwesend ist, bestimmt wird.

9. Verfahren nach einem der vorhergehenden Ansprüche, **dadurch gekennzeichnet, dass** ein Computermittel verwendet wird, das mit der mindestens einen Kamera verbunden ist, um Schritte a., b. und c. auszuführen und optional Schritte d. und/oder e. von Anspruch 5 bzw. 6 auszuführen.

10. Verfahren nach Anspruch 9, **dadurch gekennzeichnet, dass** Schritte a., b. und c. und optional Schritte d. und e. automatisch mit Hilfe des Computers ausgeführt werden.

11. Verfahren nach einem der vorhergehenden Ansprüche, **dadurch gekennzeichnet, dass** das Label ein RFID-Label ist und wobei in Schritt a. ein RFID-Lesegerät zum Lesen des Identifikationscodes von dem RFID-Label verwendet wird.

12. Verfahren nach Ansprüchen 9 und 11, **dadurch gekennzeichnet, dass** das Lesegerät mit dem Computer verbunden ist.

13. Verfahren nach einem der vorhergehenden Ansprüche zur Bestimmung der Identität und einer Position eines Tiers an dem mindestens einen ersten Ort und an einem dritten Ort, wobei Schritt b. das Verfolgen des in Schritt a. identifizierten Tiers mit Hilfe von mindestens einer Kamera, wenn sich das Tier von dem zweiten Ort zu dem mindestens einen ersten Ort oder dem dritten Ort bewegt, umfasst, während die Identität, wie sie in Schritt a. bestimmt wurde, mit dem in Schritt b. verfolgten Tier assoziiert bleibt;
c. Bestimmung mit Hilfe der mindestens einen Kamera, wann das in Schritt b. verfolgte Tier an dem mindestens einen ersten Ort oder dem dritten Ort anwesend ist und/oder ankommt, während mit Hilfe der Kamera die Position des Tiers an dem mindestens einen ersten Ort oder an dem dritten Ort, wo das Tier anwesend ist und/oder ankommt, bestimmt wird.

14. Verfahren nach einem der vorhergehenden Ansprüche zur Bestimmung der Identität und einer Position eines Tiers an jedem Ort von mehreren ersten Orten, einschließlich des mindestens ersten Orts, wobei Schritt b. das Verfolgen des in Schritt a. identifizierten Tiers mit Hilfe von mindestens einer Kamera, wenn sich das Tier von dem zweiten Ort zu einem beliebigen Ort der mehreren ersten Orte bewegt, umfasst, während die Identität, wie sie in Schritt a. bestimmt wurde, mit dem in Schritt b. verfolgten Tier assoziiert bleibt; und wobei Schritt c. die Bestimmung mit Hilfe der mindestens einen Kamera, wann das in Schritt b. verfolgte Tier an einem beliebigen Ort der mehreren ersten Orte anwesend ist oder ankommt, umfasst, während mit Hilfe der Kamera die Position des Tiers an einem beliebigen Ort der mehreren ersten Orte, wo das Tier anwesend ist und/oder ankommt, bestimmt wird.

15. Verfahren nach einem der vorhergehenden Ansprüche, **dadurch gekennzeichnet, dass** Schritte a., b. und c. und optional Schritte d. und e. von Anspruch 5 bzw. 6 automatisch ausgeführt werden.

16. System zur Ausführung des Verfahrens nach einem der vorhergehenden Ansprüche, umfassend mindestens eine Kamera, mindestens ein Lesegerät zum Lesen eines Identifikationscodes von einem Identifikationslabel, das von einem Tier getragen wird, und einen Computer, verbunden mit der mindestens einen Kamera und dem mindestens einen Lesegerät, wobei das System beispielsweise ferner mit einer Rotationsmelkanlage oder einer Trennstation zum Trennen von Tieren verbunden ist, wobei das System so angeordnet ist, dass die Identität und eine Position des Tiers mit Hilfe des Lesegeräts an dem mindestens einen ersten Ort bestimmt werden können, wo beispielsweise mindestens ein Teil einer Rotationsmelkanlage vorhanden ist oder mindestens ein Teil der Trennstation vorhanden ist, wobei das System ferner zur automatischen Ausführung der folgenden Schritte angeordnet ist:
a. Bestimmung der Identität eines Tiers durch Lesen eines Identifikationscodes von einem Identifikationslabel, das von dem Tier an einem zweiten Ort getragen wird;
b. Verfolgen des in Schritt a. identifizierten Tiers mit Hilfe von mindestens einer Kamera, wenn sich das Tier von dem zweiten Ort zu dem mindestens einen ersten Ort bewegt, während die Identität, wie sie in Schritt a. bestimmt wurde, mit dem in Schritt b. verfolgten Tier assoziiert bleibt;
c. Bestimmung mit Hilfe der mindestens einen Kamera, wann das in Schritt b. verfolgte Tier an dem mindestens einen ersten Ort anwesend ist und/oder ankommt, während die Position des Tiers an dem mindestens einen ersten Ort bestimmt wird.

17. System nach Anspruch 16 zur Ausführung des Verfahrens nach Anspruch 14, wobei das System so angeordnet ist, dass die Identität und eine Position des Tiers mit Hilfe des Lesegeräts an jedem Ort der mehreren ersten Orte bestimmt werden können und wobei das System ferner zur automatischen Ausführung der folgenden Schritte angeordnet ist:
a. Bestimmung der Identität eines Tiers durch Lesen eines Identifikationscodes von einem Identifikationslabel, das von dem Tier an dem zweiten Ort getragen wird;
b. Verfolgen des in Schritt b. identifizierten Tiers mit Hilfe von mindestens einer Kamera, wenn sich das Tier von dem zweiten Ort zu einem beliebigen Ort der mehreren ersten Orte bewegt, während die Identität, wie sie in Schritt a. bestimmt wurde, mit dem in Schritt b. verfolgten Tier assoziiert bleibt;
c. Bestimmung mit Hilfe der mindestens einen Kamera, wann das in Schritt b. verfolgte Tier an einem beliebigen Ort der mehreren ersten Orte anwesend ist und/oder ankommt, während die Position des Tiers an einem beliebigen Ort der mehreren ersten Orte, wo das Tier anwesend ist und/oder ankommt, bestimmt wird.

18. System nach Anspruch 16, **dadurch gekennzeichnet, dass** das Bild von der mindestens einen Kamera den mindestens einen ersten Ort und den zweiten Ort umfasst.

19. System nach Anspruch 17, **dadurch gekennzeichnet, dass** das Bild von der mindestens einen Kamera die mehreren ersten Orte und den zweiten Ort umfasst.

## Revendications

1. Procédé de détermination de l'identité et d'une position d'un animal au niveau d'au moins un premier emplacement, dans lequel, par exemple, au niveau de l'au moins un premier emplacement, au moins une partie d'une salle de traite rotative est présente ou au moins une partie d'une salle rotative pour nourrir des animaux est présente ou au moins une partie d'un poste de séparation est présente, **caractérisé en ce que**, le procédé comprend les étapes suivantes :
a. de détermination de l'identité d'un animal au moyen de la lecture d'un code d'identification sur une étiquette d'identification portée par l'animal au niveau d'un deuxième emplacement ;
b. de suivi de l'animal qui est identifié à l'étape a. au moyen d'au moins une caméra lorsque l'animal se déplace du deuxième emplacement vers l'au moins un premier emplacement tout en maintenant l'identité telle que déterminée à l'étape a. associée à l'animal suivi à l'étape b. ;
c. de détermination, au moyen de l'au moins une caméra, quand l'animal qui est suivi à l'étape b. est présent et/ou arrive sur l'au moins un premier emplacement tout en déterminant, au moyen de la caméra, la position de l'animal au niveau de l'au moins un premier emplacement.

2. Procédé selon la revendication 1, **caractérisé en ce que**, au deuxième emplacement, une entrée est prévue, laquelle doit être franchie par l'animal pour permettre le déplacement de l'animal vers l'au moins un premier emplacement et laquelle entrée présente des dimensions telles qu'un seul animal à la fois peut franchir l'entrée.

3. Procédé selon la revendication 1 ou 2, **caractérisé en ce que** l'animal est suivi à l'étape b. au moyen d'au moins une caméra, dans lequel l'image de l'au moins une caméra comprend l'au moins un premier emplacement et le deuxième emplacement.

4. Procédé selon l'une quelconque des revendications précédentes, **caractérisé en ce que**, l'au moins une caméra est fixe par rapport au deuxième emplacement.

5. Procédé selon l'une quelconque des revendications précédentes, **caractérisé en ce qu'**au moyen de l'au moins une caméra, à une étape d., un code visuel sur un point de traite de la salle de traite rotative qui est présent sur l'au moins un premier emplacement est déterminé.

6. Procédé selon l'une quelconque des revendications précédentes, **caractérisé en ce qu'**une porte du poste de séparation au niveau de l'au moins un premier emplacement est commandée à une étape e. sur la base des informations obtenues à l'étape c.

7. Procédé selon la revendication 6, **caractérisé en ce que** l'au moins un premier emplacement est doté d'une pluralité de portes.

8. Procédé selon l'une quelconque des revendications précédentes, **caractérisé en ce que**, à l'étape b., l'animal est suivi vers n'importe quel premier emplacement d'une pluralité de premiers emplacements, dans lequel, à l'étape c., il est déterminé quand l'animal est présent et/ou arrive à n'importe quel emplacement d'une pluralité d'emplacements tout en déterminant, au moyen de la caméra, la position de l'animal à ce premier emplacement où l'animal arrive et/ou est présent.

9. Procédé selon l'une quelconque des revendications précédentes, **caractérisé en ce que** des moyens informatiques raccordés à l'au moins une caméra sont utilisés pour réaliser les étapes a., b. et c. et facultativement pour réaliser, les étapes d. et/ou e., respectivement, des revendications 5 et 6.

10. Procédé selon la revendication 9, **caractérisé en ce que** les étapes a., b. et c. et facultativement les étapes d. et e. sont réalisées automatiquement au moyen de l'ordinateur.

11. Procédé selon l'une quelconque des revendications précédentes, **caractérisé en ce que** l'étiquette est une étiquette RFID, et dans lequel, à l'étape a., un lecteur RFID est utilisé pour lire le code d'identification sur l'étiquette RFID.

12. Procédé selon les revendications 9 et 11, **caractérisé en ce que** le lecteur est raccordé à l'ordinateur.

13. Procédé selon l'une quelconque des revendications précédentes pour déterminer l'identité et une position d'un animal au niveau de l'au moins un premier emplacement et au niveau d'un troisième emplacement, dans lequel l'étape b. comprend le suivi de l'animal qui est identifié à l'étape a. au moyen d'au moins une caméra lorsque l'animal se déplace du deuxième emplacement vers l'au moins un premier emplacement ou le troisième emplacement tout en maintenant l'identité telle que déterminée à l'étape a. associée à l'animal suivi à l'étape b. ; et
l'étape c. comprend la détermination, au moyen de l'au moins une caméra, quand l'animal qui est suivi à l'étape b. est présent et/ou arrive sur l'au moins un premier emplacement ou le troisième emplacement tout en déterminant, au moyen de la caméra, la position de l'animal au niveau de l'au moins un premier emplacement ou au niveau du troisième emplacement où l'animal est présent et/ou arrive.

14. Procédé selon l'une quelconque des revendications précédentes pour déterminer l'identité et une position d'un animal à chaque emplacement d'une pluralité de premiers emplacements incluant l'au moins un premier emplacement, dans lequel l'étape b. comprend le suivi de l'animal qui est identifié à l'étape a. au moyen d'au moins une caméra lorsque l'animal se déplace du deuxième emplacement vers n'importe quel emplacement de la pluralité de premiers emplacements tout en maintenant l'identité telle que déterminée à l'étape a. associée à l'animal suivi à l'étape b. ; et dans lequel l'étape c. comprend la détermination, au moyen de l'au moins une caméra, quand l'animal qui est suivi à l'étape b. est présent ou arrive sur n'importe quel emplacement de la pluralité de premiers emplacements tout en déterminant, au moyen de la caméra, la position de l'animal à n'importe quel emplacement de la pluralité de premiers emplacements où l'animal est présent et/ou arrive.

15. Procédé selon l'une quelconque des revendications précédentes, **caractérisé en ce que** les étapes a., b. et c. et facultativement les étapes d. et e., respectivement, des revendications 5 et 6 sont réalisées automatiquement.

16. Système de réalisation du procédé selon l'une quelconque des revendications précédentes, comprenant au moins une caméra, au moins un lecteur pour lire un code d'identification sur une étiquette d'identification portée par un animal et un ordinateur raccordé à l'au moins une caméra et à l'au moins un lecteur, dans lequel le système est, par exemple, doté en outre d'une salle de traite rotative ou d'un poste de séparation pour séparer les animaux, dans lequel le système est agencé de sorte que l'identité et une position de l'animal peuvent être déterminées au moyen du lecteur au niveau de l'au moins un premier emplacement où, par exemple, au moins une partie de la salle de traite rotative est présente ou au moins une partie du poste de séparation est présente, dans lequel le système est en outre agencé pour réaliser automatiquement les étapes suivantes :
a. de détermination de l'identité d'un animal au moyen de la lecture d'un code d'identification sur une étiquette d'identification portée par l'animal au niveau d'un deuxième emplacement ;
b. de suivi de l'animal qui est identifié à l'étape a. au moyen d'au moins une caméra lorsque l'animal se déplace du deuxième emplacement vers l'au moins un premier emplacement tout en maintenant l'identité telle que déterminée à l'étape a. associée à l'animal suivi à l'étape b. ; c. de détermination, au moyen de l'au moins une caméra, quand l'animal qui est suivi à l'étape b. est présent et/ou arrive sur l'au moins un premier emplacement tout en déterminant la position de l'animal au niveau de l'au moins un premier emplacement.

17. Système selon la revendication 16 pour réaliser le procédé selon la revendication 14, dans lequel le système est agencé de sorte que l'identité et une position de l'animal peuvent être déterminées au moyen du lecteur à chaque emplacement de la pluralité de premiers emplacements, et dans lequel le système est agencé en outre pour réaliser automatiquement les étapes suivantes :
a. de détermination de l'identité d'un animal au moyen de la lecture d'un code d'identification sur une étiquette d'identification portée par l'animal au niveau du deuxième emplacement ;
b. de suivi de l'animal qui est identifié à l'étape a. au moyen d'au moins une caméra lorsque l'animal se déplace du deuxième emplacement vers n'importe quel emplacement de la pluralité de premiers emplacements tout en maintenant l'identité telle que déterminée à l'étape a. associée à l'animal suivi à l'étape b. ;
c. de détermination, au moyen de l'au moins une caméra, quand l'animal qui est suivi à l'étape b. est présent et/ou arrive sur n'importe quel emplacement de la pluralité de premiers emplacements tout en déterminant la position de l'animal à n'importe quel emplacement de la pluralité d'emplacements où l'animal est présent et/ou arrive.

18. Système selon la revendication 16, **caractérisé en ce que** l'image de l'au moins une caméra comprend l'au moins un premier emplacement et le deuxième emplacement.

19. Système selon la revendication 17, **caractérisé en ce que** l'image de l'au moins une caméra comprend la pluralité de premiers emplacements et le deuxième emplacement.
